# EUROPEAN PATENT SPECIFICATION

(11) **EP 3 972 869 B1**
(45) Date of publication and mention of the grant of the patent: **02.12.2026**
(21) Application number: 20729474.5
(22) Date of filing: 12.05.2020
(51) Int. Cl.: B60K 35/00, B60K 37/00, B60R 13/02, B60K 35/22, B60K 35/50

(54) **METHOD AND SYSTEM FOR LAMINATING AND DYNAMICALLY AND REVERSIBLY BENDING COVER GLASS**
VERFAHREN UND SYSTEM ZUM LAMINIEREN UND DYNAMISCHEN UND REVERSIBLEN BIEGEN VON DECKGLAS
PROCÉDÉ ET SYSTÈME DE LAMINAGE ET D'INCURVATION DYNAMIQUE ET RÉVERSIBLE D'UN VERRE DE COUVERTURE

(30) Priority: 20.05.2019 US 201962850090 P
(43) Date of publication of application: 30.03.2022
(60) Divisional application: 26213923.1
(73) Proprietor: Corning Incorporated, Corning, New York 14831 (US)
(72) Inventor: BENJAMIN, Jeffrey Michael, Horseheads, New York 14845 (US); BUTH, Wesley J, Corning, New York 14830 (US); CRONK, Scott Steven, New York 14580 (US); KUMAR, Atul, Horseheads, New York 14845 (US); LAYOUNI, Khaled, Painted Post, New York 14870 (US); STEWART, Jason Scott, New York 14843 (US); YUEN, Po Ki, Painted Post, New York 14870-9388 (US)
(74) Representative: Epping - Hermann - Fischer
(86) International application number: PCT/US2020/032427
(87) International publication number: WO 2020/236457

(56) References cited:
- WO-A1-2018/005646
- DE-A1- 102014 016 323
- DE-A1- 102016 215 546
- DE-C2- 19 782 261
- DE-T1- 19 782 261

## Description

### BACKGROUND

The invention relates to vehicle interior systems, and more particularly to vehicle interior systems configured to transition between a planar configuration and a non-planar configuration. Vehicle interiors include curved surfaces and can incorporate displays in such curved surfaces. The materials used to form such curved surfaces are typically limited to polymers, which do not exhibit the durability and optical performance as glass. As such, curved glass substrates are desirable, especially when used as covers for displays. Existing methods of forming such curved glass substrates, such as hot forming, have drawbacks including high cost, optical distortion, and surface marking. Further, existing cold forming techniques require a mechanical force to hold a cold-bent glass article in place until an adhesive cures to sufficient strength to maintain the glass in the bent shape. Moreover, in both methods, the curvature of the glass is fixed such that there is no possibility to reversibly bend, flatten, and re-bend the glass.

DE 10 2016 215 546 A1 describes a method for producing a vehicle interior trim part. A glass panel having a rear side and a first and second region is provided. A first stiffener is fastened to the first region of the glass panel, thereby forming a stiffened region of the glass panel. The second region of the glass panel is bended by means of cold forming, such that a bent region of the glass panel is formed in a region adjacent to the stiffened region. The glass panel is held in the form by fastening means.

DE 10 2014 016 323 A1 describes a display device 10 comprising a flexible display device 12. The display device 10 comprises in a central tunnel a depression, in which the display device 12 is arranged in a planar manner in a stowage position. In the stowage position, the upper side of the display device 12 is arranged substantially flush with the central tunnel 16. At a free end region of the display device a clamping device is arranged, wherein the clamping device serves to connect a plurality of layers of the display device to one another or hold these together.

The display device comprises an adjusting device, which is designed to bend the display device upwards from the stowage position into s use position.

A pivotable lever mechanism comprises a single lever, which is mounted pivotably with an end region on a component of the display device.

DE 197 82 261 C2 describes a portable electronic equipment with a lid, a main body and a flexible liquid crystal display panel. The flexible liquid crystal display panel is mounted on the main body and the lid over their entire surface areas. A hinge-joint is provided for coupling the main body to the lid for opening and respectively closing it. Clearance grooves for receiving a bend in the flexible liquid crystal display panel are provided both in the main body and the lid. WO 2018/005646 A1 describes a process comprising cold-forming a flat glass substrate into a non-planar shape using a die. The cold-formed glass substrate is bonded to a non-planar rigid support structure at a plurality of non-planar points using the die. Bonding methods include injection molding the non-planar rigid support structure, and direct bonding. An article is also provided, comprising a cold-formed glass substrate having opposing major surfaces and a curved shape, the opposing major surfaces comprising a surface stress that differ from one another. The cold-formed glass substrate is attached to a rigid support structure having the curved shape. The cold-formed glass substrate includes an open region not in direct contact with the non-planar rigid support structure, and the open region has a curved shape maintained by the non-planar rigid support structure.

### SUMMARY

The invention is defined by the independent claims. Optional embodiments are given by the subject-matter of the dependent claims.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective view of a vehicle interior with vehicle interior systems, according to exemplary embodiments;
FIG. 2 is a top view of a vehicle interior system having a bendable surface, according to an exemplary embodiment;
FIG. 3 depicts an exploded view of the vehicle interior surface of FIG. 2, according to an exemplary embodiment;
FIG. 4 depicts a method of assembling a vehicle interior system, according to an exemplary embodiment;
FIG. 5 depicts an alignment tool for aligning the frames of the vehicle interior system, according to an exemplary embodiment; and
FIGS. 6A and 6B depict various configurations of the frames, according to an exemplary embodiment.

### DETAILED DESCRIPTION

Reference will now be made in detail to various embodiments, examples of which are illustrated in the accompanying drawings. Conventionally, a vehicle interior system may include a variety of different flat or curved surfaces but not surfaces that can transition between flat and curved. Embodiments of the present invention provide vehicle interior systems having a cover material bonded to a frame that is dynamically bendable between planar and non-planar configurations. In particular, the vehicle interior systems include two frame sections that define a bending axis and a cover material that is bonded to and extends across both frames, including across the bending axis. In embodiments, the frames may be driven by actuator arms to move the frames between a planar configuration and a non-planar configuration. Further, in embodiments, the vehicle interior systems may include displays, and the dynamic bending of the system allows for the display to be angled toward the driver so as to enhance the visibility of the display. Additionally, non-display systems can be incorporated into other structures of a vehicle, such as storage compartments. These and other embodiments of the vehicle interior system are described hereinbelow, and the following discussion is intended to be illustrative and not limiting.

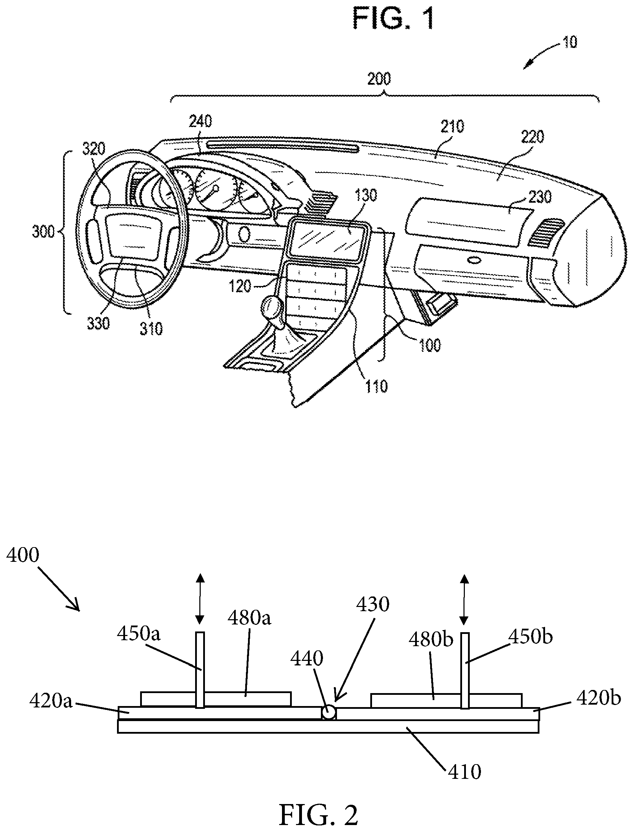

FIG. 1 shows an exemplary vehicle interior 10 that includes three different embodiments of a vehicle interior system 100, 200, 300. Vehicle interior system 100 includes a frame, shown as center console base 110, with a curved surface 120 including an optically bonded display 130. Vehicle interior system 200 includes a frame, shown as dashboard base 210, with a curved surface 220 including an optically bonded display 230. The dashboard base 210 typically includes an instrument panel 240 which may also include an optically bonded display. Vehicle interior system 300 includes a frame, shown as steering wheel base 310, with a curved surface 320 and an optically bonded display 330. In one or more embodiments, the vehicle interior system includes a frame that is an arm rest, a pillar, a seat back, a floor board, a headrest, a door panel, or any portion of the interior of a vehicle that includes a curved surface. In other embodiments, the frame is a portion of a housing for a free-standing display (i.e., a display that is not permanently connected to a portion of the vehicle).

The embodiments of the vehicle interior systems 100, 200 and 300 are merely exemplary. Further, while each of the embodiments depicted include at least one display, a display is not required according to the vehicle interior systems of the present invention. For example, the vehicle interior systems according to the present invention include the non-display cover surface for the dashboard, center console, door panel, etc. In such embodiments, the vehicle interior system may be provided with a coating (e.g., an ink or pigment coating) with a pattern (e.g., a brushed metal appearance, a wood grain appearance, a leather appearance, a colored appearance, etc.) to visually match the cover material with adjacent non-glass components. In specific embodiments, such ink or pigment coating may have a transparency level that provides for deadfront functionality.

FIG. 2 depicts a top view of the dynamically bendable vehicle interior system 400. As can be seen, the system 400 includes a layer of cover material 410 bonded to a first frame 420a and to a second frame 420b. In embodiments, the cover material 410 is one of a glass, a glass-ceramic, or a polymer. Exemplary glass materials include soda lime silicate glass, an aluminosilicate glass, a borosilicate glass, an boroaluminosilicate glass, or an alkali aluminosilicate glass. Such glass materials may be chemically strengthened such as through ion-exchange strengthening. Particular glass compositions and chemical strengthening techniques are discussed below. Exemplary glass-ceramics suitable for the cover material include at least one of the Li₂O x Al₂O₃ x *n*SiO₂ system (LAS system), the MgO x Al₂O₃ x *n*SiO₂ system (the MAS system), and the ZnO x Al₂O₃ x *n*SiO₂ system (the ZAS system), among others. Exemplary plastics suitable for the cover material include at least one of polymethylmethacrylate (PMMA), polyethylene terephthalate (PET), and cellulose triacetate (TAC), among others.

The first frame 420a and the second frame 420b define a bending axis 430, and the cover material 410 is continuous across the bending axis 430. In particular the cover material 410 is a continuous layer or sheet of glass, glass-ceramic, or polymer. In embodiments, the first frame 420a and the second frame 420b are joined by a pivotable joint 440 at the bending axis 430. In other embodiments, the first frame 420a and the second frame 420b are only joined by the cover material 410.

In embodiments, the first frame 420a is connected to a first actuator arm 450a, and the second frame is connected to a second actuator arm 450b. The actuator arms 450a, 450b move the frames 420a, 420b (as denoted by the double ended arrows of FIG. 2) such that the cover material 410 bends about the bending axis 430. In embodiments, the actuator arms 450a, 450b can be actuated via a variety of different actuation means, such as pneumatic or hydraulic actuation or mechanical linkages to a motor (such as a stepper motor).

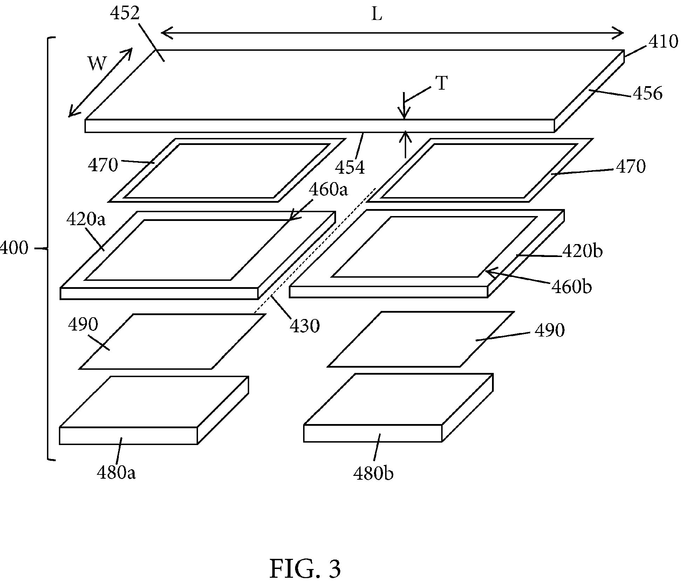

FIG. 3 depicts an exploded view of the system 400. As can be seen in FIG. 3, the cover material 410 has a first major surface 452 and a second major surface 454 that are joined by a minor surface 456. The first major surface 452 is a viewing surface for the occupants of the vehicle in which the vehicle interior system 400 is installed. The second major surface 454 is bonded to the first frame 420a and to the second frame 420b. In the embodiment depicted in FIG. 3, the first frame 420a includes a first aperture 460a, and the second frame 420b includes a second aperture 460b. In embodiments, adhesive 470 is applied around the apertures 460a, 460b to bond the second major surface 454 of the cover material 410 to the frames 420a, 420b. In embodiments, the apertures 460a, 460b are provided in the frames 420a, 420b so that a first display 480a and a second display 480b can be bonded to the second major surface 454 of the cover material 410 using, e.g., optically clear adhesive 490. The displays can be any of a variety of display types, including an LED display, a plasma display, an OLED display, and/or an LCD display.

FIG. 3 depicts the dimensions of the cover material 410. The cover material 410 has a length L and a width W. In embodiments, the length L is from 5 cm to 250 cm. In other embodiments, the length L is from 10 cm to 200 cm, and in still other embodiments, the length L is from 20 cm to 100 cm. In embodiments, the width W is from 5 cm to 250 cm. In other embodiments, the width W is from 10 cm to 200 cm, and in still other embodiments, the width W is from 20 cm to 100 cm. Further, the distance between the first major surface 452 and the second major surface 454 defines a thickness T of no more than 2 mm in embodiments. In other embodiments, the thickness T is from 0.1 mm to 1.3 mm. In embodiments, the cover material 410 substantially covers the frames 420a, 420b such that no portion of the frames 420a, 420b can be seen around the periphery of the cover material 410.

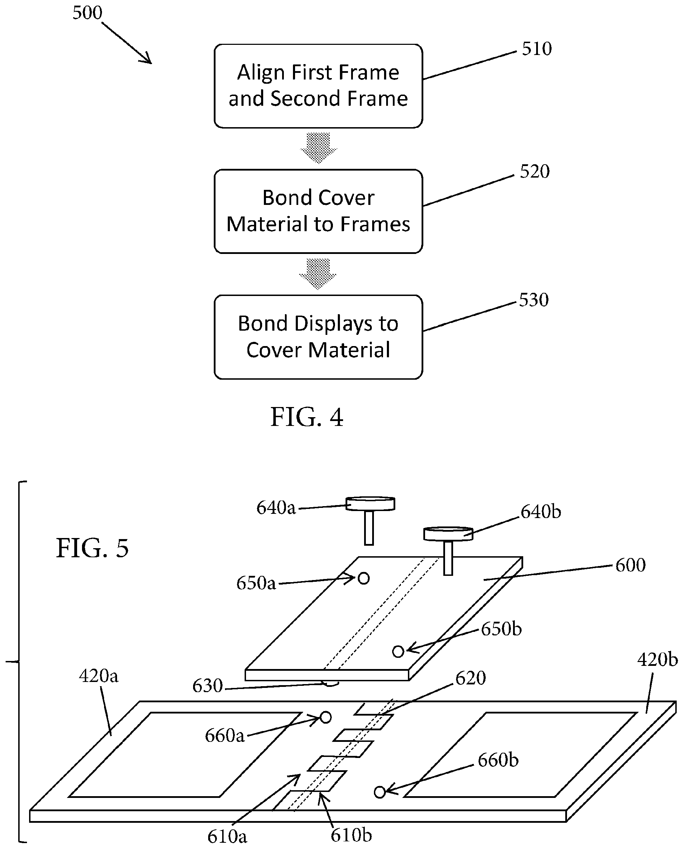

Having described the elements of the vehicle interior system 400, attention will now be turned to the manner in which the elements are assembled. In this regard, FIG. 4 provides a flowchart of an exemplary method 500 by which the system 400 is assembled. In a first step 510, the first frame 420a and the second frame 420b are aligned. FIG. 5 depicts an alignment tool 600 that assists in performing the first step 510 of the assembling method 500. As shown in FIG. 5, the first frame 420a and second frame 420b are brought together. In the embodiment depicted, the first frame 420a and the second frame 420b have complementary adjoining edges 610a, 610b. An alignment feature, in particular a groove 620, extends across the adjoining edges 610a, 610b. A complementary alignment feature, in particular a ridge 630 is provided on the alignment tool 600. When the frames 420a, 420b are brought into proximity, the alignment tool 600 is brought into contact with the frames 420a, 420b such that the ridge 630 lies in the groove 620, which aligns the adjoining edges 610a, 610b of the frames 420a, 420b. A first fastener 640a is inserted through a first through hole 650a of the alignment tool 600 and into a first receiving hole 660a of the first frame 420a. Similarly, a second fastener 640b is inserted through a second through hole 650b of the alignment tool 600 and into a second receiving hole 660b of the second frame 420b. In an exemplary embodiment, the fasteners 640a, 640b are threaded and the receive holes 660a, 660b contain mating threads. In this way, the frames 620a, 620b are secured together in alignment by the alignment tool 600.

Returning to the method 500 of FIG. 4, the next step 520 after the aligning step 510 is to bond the cover material 410 to the frames 420a, 420b. In particular, the alignment tool 600 is provided on a first side of the frames 420a, 420b, and the cover material 410 is provided on the side opposite to the side having the alignment tool 600. As mentioned above, the bonding step 520 involves the use of at least one adhesive 470. In embodiments, a first adhesive 470 is applied around the apertures 460a, 460b of the frames 420a, 420b, and no other adhesive is applied anywhere else on the frames 420a, 420b. In other embodiments, a first adhesive 470 is applied around the apertures 460a, 460b, and a second adhesive is applied between the two apertures 460a, 460b. In still another embodiment, the first adhesive 470 is applied over the entire bonding surface of the first and second frames 420a, 420b. In embodiments, the first adhesive 470 and the second adhesive have a modulus of 1.1 MPa to 10 GPa.

In embodiments, the adhesive 470 comprises a liquid adhesive. Exemplary liquid adhesives include toughened epoxy, flexible epoxy, acrylics, silicones, urethanes, polyurethanes, and silane modified polymers. In specific embodiments, the liquid adhesive includes one or more toughened epoxies, such as EP21TDCHT-LO (available from Masterbond^{®}, Hackensack, NJ), 3M^{™} Scotch-Weld^{™} Epoxy DP460 Off-White (available from 3M, St. Paul, MN). In other embodiments, the liquid adhesive includes one or more flexible epoxies, such as Masterbond EP21TDC-2LO (available from Masterbond^{®}, Hackensack, NJ), 3M^{™} Scotch-Weld^{™} Epoxy 2216 B/A Gray (available from 3M, St. Paul, MN), and 3M^{™} Scotch-Weld^{™} Epoxy DP125. In still other embodiments, the liquid adhesive includes one or more acrylics, such as LORD^{®} Adhesive 410/Accelerator 19 w/ LORD^{®} AP 134 primer, LORD^{®} Adhesive 852/LORD^{®} Accelerator 25GB (both being available from LORD Corporation, Cary, NC), DELO PUR SJ9356 (available from DELO Industrial Adhesives, Windach, Germany), Loctite^{®} AA4800, Loctite^{®} HF8000. TEROSON^{®} MS 9399, and TEROSON^{®} MS 647-2C (these latter four being available from Henkel AG & Co. KGaA, Düsseldorf, Germany), among others. In yet other embodiments, the liquid adhesive includes one or more urethanes, such as 3M^{™} Scotch-Weld^{™} Urethane DP640 Brown and 3M^{™} Scotch-Weld^{™} Urethane DP604, and in still further embodiments, the liquid adhesive includes one or more silicones, such as Dow Corning^{®} 995 (available from Dow Corning Corporation, Midland, MI).

Advantageously, the bonding step 520 is performed while the frames 420a, 420b are in a planar configuration. As compared to some conventional techniques for forming curved glass articles in which additional equipment is needed to hold the cover material in place during curing, curing in a planar configuration does not require, e.g., vacuum chucks, clamps, presses, pressure rollers, etc. to maintain the curvature of the glass. Notwithstanding and as will be discussed below, the cover material 410 is still able to be bent or curved even after curing.

After the bonding step 520, the method 500 includes an optional display attachment step 530. That is, while the embodiments depicted thus far have included displays 480a, 480b, a display is not required for each frame 420a, 420b. Additionally, in embodiments, neither frame includes an aperture for a display. In embodiments including one or more displays 480a, 480b, the displays 480a, 480b are bonded to the second major surface 454 of the cover material using an optically clear adhesive 490. In other embodiments, the displays 480a, 480b are attached to the cover material 410 prior to attaching the cover material 410 to the frames 420a, 420b. In such embodiments

After the adhesive 470 bonding the cover material 410 to the frames 420a, 420b has cured, the alignment tool 600 can be removed. However, in embodiments, the alignment tool 600 is kept attached to the frames 420a, 420b during storage and/or transport to stabilize the assembly. In such embodiments, the alignment tool 600 could be removed just prior to installation of the vehicle interior system 400 into a vehicle.

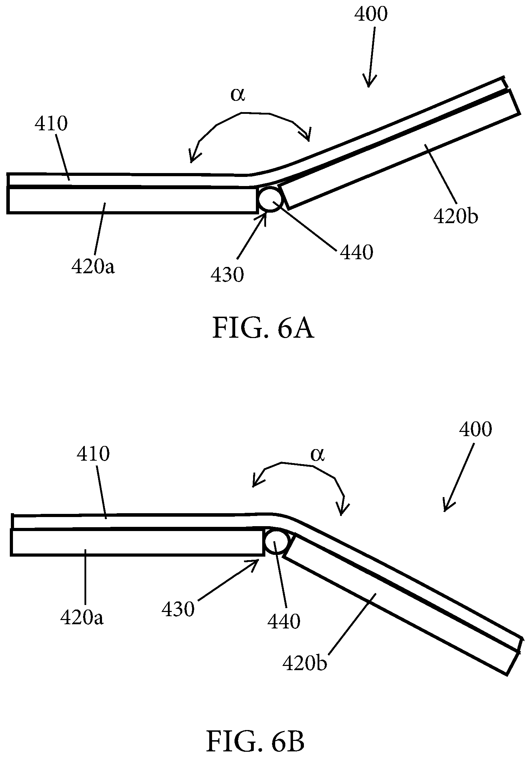

FIGS. 6A and 6B demonstrate the curvature that can be introduced into the vehicle interior system 400. As shown in FIG. 6A, the second frame 420b forms an angle α with respect to the first frame 420a, which creates a curvature in the cover material 410. In embodiments, the angle α between the first frame 420a and the second frame 420b is from about 90° to less than 180°. In other embodiments, the angle α is from about 110° to less than 180°, and in still other embodiments, the angle α is from about 130° to less than 180°. In FIG. 6A, the curvature is concave, and in embodiments, the cover material 410 can be bent to a concave curve having a radius of curvature as tight as 60 mm, as tight as 40 mm, or even as tight as 30 mm (or in other words, a radius of curvature of about 30 mm or greater, about 50 mm or greater or about 60 mm or greater) in the non-planar configuration. FIG. 6B depicts a convex curvature of the vehicle interior system 400. That is, the angle α between the first frame 420a and the second frame 420b is from greater than 180° to about 270° in embodiments. In other embodiments, the angle α is from greater than 180° to about 250°, and in still other embodiments, the angle α is from greater than 180° to about 250°. In embodiments, the cover material 410 can be bent to a convex curve having a radius of curvature as tight as 60 mm, as tight as 40 mm, or even as tight as 30 mm (or in other words, a radius of curvature of about 30 mm or greater, about 50 mm or greater or about 60 mm or greater) in the non-planar configuration.

The various embodiments of the vehicle interior system may be incorporated into vehicles such as trains, automobiles (e.g., cars, trucks, buses and the like), sea craft (boats, ships, submarines, and the like), and aircraft (e.g., drones, airplanes, jets, helicopters and the like). As mentioned above, the dynamically bendable vehicle interior system 400 allows for a surface to transition between a planar configuration and a non-planar configuration. In embodiments, the non-planar configuration may correspond to directing a display to a particular viewer, such as the driver of a vehicle so that the driver does not have to take his or her eyes away from the path ahead. In other embodiments, in particular embodiments without a display, the planar or non-planar configuration may correspond to the opening of a storage compartment, such as the opening of a glove box in a dashboard.

### Strengthened Glass Properties

As noted above, the cover material 410 may comprise a strengthened glass. In one or more embodiments, cover material 410 may be strengthened to include compressive stress that extends from a surface to a depth of compression (DOC). The compressive stress regions are balanced by a central portion exhibiting a tensile stress. At the DOC, the stress crosses from a negative (compressive) stress to a positive (tensile) stress.

In various embodiments, glass cover material 410 may be strengthened mechanically by utilizing a mismatch of the coefficient of thermal expansion between portions of the article to create a compressive stress region and a central region exhibiting a tensile stress. In some embodiments, the glass substrate may be strengthened thermally by heating the glass to a temperature above the glass transition point and then rapidly quenching.

In various embodiments, glass cover material 410 may be chemically strengthened by ion exchange. In the ion exchange process, ions at or near the surface of the glass substrate are replaced by - or exchanged with - larger ions having the same valence or oxidation state. In those embodiments in which the glass substrate comprises an alkali aluminosilicate glass, ions in the surface layer of the article and the larger ions are monovalent alkali metal cations, such as Li⁺, Na⁺, K⁺, Rb⁺, and Cs⁺. Alternatively, monovalent cations in the surface layer may be replaced with monovalent cations other than alkali metal cations, such as Ag⁺ or the like. In such embodiments, the monovalent ions (or cations) exchanged into the glass substrate generate a stress.

Ion exchange processes are typically carried out by immersing a glass substrate in a molten salt bath (or two or more molten salt baths) containing the larger ions to be exchanged with the smaller ions in the glass substrate. It should be noted that aqueous salt baths may also be utilized. In addition, the composition of the bath(s) may include more than one type of larger ions (e.g., Na+ and K+) or a single larger ion. It will be appreciated by those skilled in the art that parameters for the ion exchange process, including, but not limited to, bath composition and temperature, immersion time, the number of immersions of the glass substrate in a salt bath (or baths), use of multiple salt baths, additional steps such as annealing, washing, and the like, are generally determined by the composition of the glass substrate (including the structure of the article and any crystalline phases present) and the desired DOC and CS of the glass substrate that results from strengthening. Exemplary molten bath compositions may include nitrates, sulfates, and chlorides of the larger alkali metal ion. Typical nitrates include KNO₃, NaNO₃, LiNO₃, NaSO₄ and combinations thereof. The temperature of the molten salt bath typically is in a range from about 380°C up to about 450°C, while immersion times range from about 15 minutes up to about 100 hours depending on glass substrate thickness, bath temperature and glass (or monovalent ion) diffusivity. However, temperatures and immersion times different from those described above may also be used.

In one or more embodiments, the glass substrates may be immersed in a molten salt bath of 100% NaNO₃, 100% KNO₃, or a combination of NaNO₃ and KNO₃ having a temperature from about 370 °C to about 480 °C. In some embodiments, the glass substrate may be immersed in a molten mixed salt bath including from about 5% to about 90% KNO₃ and from about 10% to about 95% NaNO₃. In one or more embodiments, the glass substrate may be immersed in a second bath, after immersion in a first bath. The first and second baths may have different compositions and/or temperatures from one another. The immersion times in the first and second baths may vary. For example, immersion in the first bath may be longer than the immersion in the second bath.

In one or more embodiments, the glass substrate may be immersed in a molten, mixed salt bath including NaNO₃ and KNO₃ (e.g., 49%/51%, 50%/50%, 51%/49%) having a temperature less than about 420 °C (e.g., about 400 °C or about 380 °C). for less than about 5 hours, or even about 4 hours or less.

Ion exchange conditions can be tailored to provide a "spike" or to increase the slope of the stress profile at or near the surface of the resulting glass substrate. The spike may result in a greater surface CS value. This spike can be achieved by a single bath or multiple baths, with the bath(s) having a single composition or mixed composition, due to the unique properties of the glass compositions used in the glass substrates described herein.

In one or more embodiments, where more than one monovalent ion is exchanged into the glass substrate, the different monovalent ions may exchange to different depths within the glass substrate (and generate different magnitudes stresses within the glass substrate at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method. As used herein CS may be the "maximum compressive stress" which is the highest compressive stress value measured within the compressive stress layer. In some embodiments, the maximum compressive stress is located at the surface of the glass substrate. In other embodiments, the maximum compressive stress may occur at a depth below the surface, giving the compressive profile the appearance of a "buried peak."

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass substrate is chemically strengthened by an ion exchange treatment, FSM or SCALP may be used depending on which ion is exchanged into the glass substrate. Where the stress in the glass substrate is generated by exchanging potassium ions into the glass substrate, FSM is used to measure DOC. Where the stress is generated by exchanging sodium ions into the glass substrate, SCALP is used to measure DOC. Where the stress in the glass substrate is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass substrates is measured by FSM. Central tension or CT is the maximum tensile stress and is measured by SCALP.

In one or more embodiments, the glass substrate may be strengthened to exhibit a DOC that is described as a fraction of the thickness T of the glass substrate (as described herein). For example, in one or more embodiments, the DOC may be equal to or greater than about 0.05T, equal to or greater than about 0.1T, equal to or greater than about 0.11T, equal to or greater than about 0.12T, equal to or greater than about 0.13T, equal to or greater than about 0.14T, equal to or greater than about 0.15T, equal to or greater than about 0.16T, equal to or greater than about 0.17T, equal to or greater than about 0.18T, equal to or greater than about 0.19T, equal to or greater than about 0.2T, equal to or greater than about 0.21T. In some embodiments, the DOC may be in a range from about 0.08T to about 0.25T, from about 0.09T to about 0.25T, from about 0.18T to about 0.25T, from about 0.11T to about 0.25T, from about 0.12T to about 0.25T, from about 0.13T to about 0.25T, from about 0.14T to about 0.25T, from about 0.15T to about 0.25T, from about 0.08T to about 0.24T, from about 0.08T to about 0.23T, from about 0.08T to about 0.22T, from about 0.08T to about 0.21T, from about 0.08T to about 0.2T, from about 0.08T to about 0.19T, from about 0.08T to about 0.18T, from about 0.08T to about 0.17T, from about 0.08T to about 0.16T, or from about 0.08T to about 0.15T. In some instances, the DOC may be about 20 µm or less. In one or more embodiments, the DOC may be about 40 µm or greater (e.g., from about 40 µm to about 300 µm, from about 50 µm to about 300 µm, from about 60 µm to about 300 µm, from about 70 µm to about 300 µm, from about 80 µm to about 300 µm, from about 90 µm to about 300 µm, from about 100 µm to about 300 µm, from about 110 µm to about 300 µm, from about 120 µm to about 300 µm, from about 140 µm to about 300 µm, from about 150 µm to about 300 µm, from about 40 µm to about 290 µm, from about 40 µm to about 280 µm, from about 40 µm to about 260 µm, from about 40 µm to about 250 µm, from about 40 µm to about 240 µm, from about 40 µm to about 230 µm, from about 40 µm to about 220 µm, from about 40 µm to about 210 µm, from about 40 µm to about 200 µm, from about 40 µm to about 180 µm, from about 40 µm to about 160 µm, from about 40 µm to about 150 µm, from about 40 µm to about 140 µm, from about 40 µm to about 130 µm, from about 40 µm to about 120 µm, from about 40 µm to about 110 µm, or from about 40 µm to about 100 µm. In other embodiments, DOC falls within any one of the exact numerical ranges set forth in this paragraph.

In one or more embodiments, the strengthened glass substrate may have a CS (which may be found at the surface or a depth within the glass substrate) of about 200 MPa or greater, 300 MPa or greater, 400 MPa or greater, about 500 MPa or greater, about 600 MPa or greater, about 700 MPa or greater, about 800 MPa or greater, about 900 MPa or greater, about 930 MPa or greater, about 1000 MPa or greater, or about 1050 MPa or greater.

In one or more embodiments, the strengthened glass substrate may have a maximum tensile stress or central tension (CT) of about 20 MPa or greater, about 30 MPa or greater, about 40 MPa or greater, about 45 MPa or greater, about 50 MPa or greater, about 60 MPa or greater, about 70 MPa or greater, about 75 MPa or greater, about 80 MPa or greater, or about 85 MPa or greater. In some embodiments, the maximum tensile stress or central tension (CT) may be in a range from about 40 MPa to about 100 MPa. In other embodiments, CS falls within the exact numerical ranges set forth in this paragraph.

### Glass Compositions

Suitable glass compositions for use in glass cover material 410 include soda lime glass, aluminosilicate glass, borosilicate glass, boroaluminosilicate glass, alkali-containing aluminosilicate glass, alkali-containing borosilicate glass, and alkali-containing boroaluminosilicate glass.

Unless otherwise specified, the glass compositions disclosed herein are described in mole percent (mol%) as analyzed on an oxide basis.

In one or more embodiments, the glass composition may include SiO₂ in an amount in a range from about 66 mol% to about 80 mol%, from about 67 mol% to about 80 mol%, from about 68 mol% to about 80 mol%, from about 69 mol% to about 80 mol%, from about 70 mol% to about 80 mol%, from about 72 mol% to about 80 mol%, from about 65 mol% to about 78 mol%, from about 65 mol% to about 76 mol%, from about 65 mol% to about 75 mol%, from about 65 mol% to about 74 mol%, from about 65 mol% to about 72 mol%, or from about 65 mol% to about 70 mol%, and all ranges and sub-ranges therebetween.

In one or more embodiments, the glass composition includes Al₂O₃ in an amount greater than about 4 mol%, or greater than about 5 mol%. In one or more embodiments, the glass composition includes Al₂O₃ in a range from greater than about 7 mol% to about 15 mol%, from greater than about 7 mol% to about 14 mol%, from about 7 mol% to about 13 mol%, from about 4 mol% to about 12 mol%, from about 7 mol% to about 11 mol%, from about 8 mol% to about 15 mol%, from about 9 mol% to about 15 mol%, from about 10 mol% to about 15 mol%, from about 11 mol% to about 15 mol%, or from about 12 mol% to about 15 mol%, and all ranges and sub-ranges therebetween. In one or more embodiments, the upper limit of Al₂O₃ may be about 14 mol%, 14.2 mol%, 14.4 mol%, 14.6 mol%, or 14.8 mol%.

In one or more embodiments, the glass article is described as an aluminosilicate glass article or including an aluminosilicate glass composition. In such embodiments, the glass composition or article formed therefrom includes SiO₂ and Al₂O₃ and is not a soda lime silicate glass. In this regard, the glass composition or article formed therefrom includes Al₂O₃ in an amount of about 2 mol% or greater, 2.25 mol% or greater, 2.5 mol% or greater, about 2.75 mol% or greater, about 3 mol% or greater.

In one or more embodiments, the glass composition comprises B₂O₃ (e.g., about 0.01 mol% or greater). In one or more embodiments, the glass composition comprises B₂O₃ in an amount in a range from about 0 mol% to about 5 mol%, from about 0 mol% to about 4 mol%, from about 0 mol% to about 3 mol%, from about 0 mol% to about 2 mol%, from about 0 mol% to about 1 mol%, from about 0 mol% to about 0.5 mol%, from about 0.1 mol% to about 5 mol%, from about 0.1 mol% to about 4 mol%, from about 0.1 mol% to about 3 mol%, from about 0.1 mol% to about 2 mol%, from about 0.1 mol% to about 1 mol%, from about 0.1 mol% to about 0.5 mol%, and all ranges and sub-ranges therebetween. In one or more embodiments, the glass composition is substantially free of B₂O₃.

As used herein, the phrase "substantially free" with respect to the components of the composition means that the component is not actively or intentionally added to the composition during initial batching, but may be present as an impurity in an amount less than about 0.001 mol%.

In one or more embodiments, the glass composition optionally comprises P₂O₅ (e.g., about 0.01 mol% or greater). In one or more embodiments, the glass composition comprises a non-zero amount of P₂O₅ up to and including 2 mol%, 1.5 mol%, 1 mol%, or 0.5 mol%. In one or more embodiments, the glass composition is substantially free of P₂O₅.

In one or more embodiments, the glass composition may include a total amount of R₂O (which is the total amount of alkali metal oxide such as Li₂O, Na₂O, K₂O, Rb₂O, and Cs₂O) that is greater than or equal to about 8 mol%, greater than or equal to about 10 mol%, or greater than or equal to about 12 mol%. In some embodiments, the glass composition includes a total amount of R₂O in a range from about 8 mol% to about 20 mol%, from about 8 mol% to about 18 mol%, from about 8 mol% to about 16 mol%, from about 8 mol% to about 14 mol%, from about 8 mol% to about 12 mol%, from about 9 mol% to about 20 mol%, from about 10 mol% to about 20 mol%, from about 11 mol% to about 20 mol%, from about 12 mol% to about 20 mol%, from about 13 mol% to about 20 mol%, from about 10 mol% to about 14 mol%, or from 11 mol% to about 13 mol%, and all ranges and sub-ranges therebetween. In one or more embodiments, the glass composition may be substantially free of Rb₂O, Cs₂0 or both Rb₂O and Cs₂O. In one or more embodiments, the R₂O may include the total amount of Li₂O, Na₂O and K₂O only. In one or more embodiments, the glass composition may comprise at least one alkali metal oxide selected from Li₂O, Na₂O and K₂O, wherein the alkali metal oxide is present in an amount greater than about 8 mol% or greater.

In one or more embodiments, the glass composition comprises Na₂O in an amount greater than or equal to about 8 mol%, greater than or equal to about 10 mol%, or greater than or equal to about 12 mol%. In one or more embodiments, the composition includes Na₂O in a range from about from about 8 mol% to about 20 mol%, from about 8 mol% to about 18 mol%, from about 8 mol% to about 16 mol%, from about 8 mol% to about 14 mol%, from about 8 mol% to about 12 mol%, from about 9 mol% to about 20 mol%, from about 10 mol% to about 20 mol%, from about 11 mol% to about 20 mol%, from about 12 mol% to about 20 mol%, from about 13 mol% to about 20 mol%, from about 10 mol% to about 14 mol%, or from 11 mol% to about 16 mol%, and all ranges and sub-ranges therebetween.

In one or more embodiments, the glass composition includes less than about 4 mol% K₂O,less than about 3 mol% K₂O,or less than about 1 mol% K₂O. In some instances, the glass composition may include K₂O in an amount in a range from about 0 mol% to about 4 mol%, from about 0 mol% to about 3.5 mol%, from about 0 mol% to about 3 mol%, from about 0 mol% to about 2.5 mol%, from about 0 mol% to about 2 mol%, from about 0 mol% to about 1.5 mol%, from about 0 mol% to about 1 mol%, from about 0 mol% to about 0.5 mol%, from about 0 mol% to about 0.2 mol%, from about 0 mol% to about 0.1 mol%, from about 0.5 mol% to about 4 mol%, from about 0.5 mol% to about 3.5 mol%, from about 0.5 mol% to about 3 mol%, from about 0.5 mol% to about 2.5 mol%, from about 0.5 mol% to about 2 mol%, from about 0.5 mol% to about 1.5 mol%, or from about 0.5 mol% to about 1 mol%, and all ranges and sub-ranges therebetween. In one or more embodiments, the glass composition may be substantially free of K₂O.

In one or more embodiments, the glass composition is substantially free of Li₂O.

In one or more embodiments, the amount of Na₂O in the composition may be greater than the amount of Li₂O. In some instances, the amount of Na₂O may be greater than the combined amount of Li₂O and K₂O. In one or more alternative embodiments, the amount of Li₂O in the composition may be greater than the amount of Na₂O or the combined amount of Na₂O and K₂O.

In one or more embodiments, the glass composition may include a total amount of RO (which is the total amount of alkaline earth metal oxide such as CaO, MgO, BaO, ZnO and SrO) in a range from about 0 mol% to about 2 mol%. In some embodiments, the glass composition includes a non-zero amount of RO up to about 2 mol%. In one or more embodiments, the glass composition comprises RO in an amount from about 0 mol% to about 1.8 mol%, from about 0 mol% to about 1.6 mol%, from about 0 mol% to about 1.5 mol%, from about 0 mol% to about 1.4 mol%, from about 0 mol% to about 1.2 mol%, from about 0 mol% to about 1 mol%, from about 0 mol% to about 0.8 mol%, from about 0 mol% to about 0.5 mol%, and all ranges and sub-ranges therebetween.

In one or more embodiments, the glass composition includes CaO in an amount less than about 1 mol%, less than about 0.8 mol%, or less than about 0.5 mol%. In one or more embodiments, the glass composition is substantially free of CaO.

In some embodiments, the glass composition comprises MgO in an amount from about 0 mol% to about 7 mol%, from about 0 mol% to about 6 mol%, from about 0 mol% to about 5 mol%, from about 0 mol% to about 4 mol%, from about 0.1 mol% to about 7 mol%, from about 0.1 mol% to about 6 mol%, from about 0.1 mol% to about 5 mol%, from about 0.1 mol% to about 4 mol%, from about 1 mol% to about 7 mol%, from about 2 mol% to about 6 mol%, or from about 3 mol% to about 6 mol%, and all ranges and sub-ranges therebetween.

In one or more embodiments, the glass composition comprises ZrO₂ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises ZrO₂ in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

In one or more embodiments, the glass composition comprises SnO₂ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises SnO2 in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

In one or more embodiments, the glass composition may include an oxide that imparts a color or tint to the glass articles. In some embodiments, the glass composition includes an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

In one or more embodiments, the glass composition includes Fe expressed as Fe₂O₃, wherein Fe is present in an amount up to (and including) about 1 mol%. In some embodiments, the glass composition is substantially free of Fe. In one or more embodiments, the glass composition comprises Fe₂O₃ in an amount equal to or less than about 0.2 mol%, less than about 0.18 mol%, less than about 0.16 mol%, less than about 0.15 mol%, less than about 0.14 mol%, less than about 0.12 mol%. In one or more embodiments, the glass composition comprises Fe₂O₃ in a range from about 0.01 mol% to about 0.2 mol%, from about 0.01 mol% to about 0.18 mol%, from about 0.01 mol% to about 0.16 mol%, from about 0.01 mol% to about 0.15 mol%, from about 0.01 mol% to about 0.14 mol%, from about 0.01 mol% to about 0.12 mol%, or from about 0.01 mol% to about 0.10 mol%, and all ranges and sub-ranges therebetween.

Where the glass composition includes TiO₂, TiO₂ may be present in an amount of about 5 mol% or less, about 2.5 mol% or less, about 2 mol% or less or about 1 mol% or less. In one or more embodiments, the glass composition may be substantially free of TiO₂.

An exemplary glass composition includes SiO₂ in an amount in a range from about 65 mol% to about 75 mol%, Al₂O₃ in an amount in a range from about 8 mol% to about 14 mol%, Na₂O in an amount in a range from about 12 mol% to about 17 mol%, K₂O in an amount in a range of about 0 mol% to about 0.2 mol%, and MgO in an amount in a range from about 1. 5 mol% to about 6 mol%. Optionally, SnO₂ may be included in the amounts otherwise disclosed herein. It should be understood, that while the preceding glass composition paragraphs express approximate ranges, in other embodiments, glass cover material 410 may be made from any glass composition falling with any one of the exact numerical ranges discussed above.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element, and is not intended to be construed as meaning only one.

## Claims

1. A vehicle interior system (400) configured to be integrated in a vehicle, comprising:
a first frame (420a) having a first end and a second end;
a second frame (420b) having a third end and a fourth end, wherein the third end of the second frame (420b) is arranged proximal to the second end of the first frame (420a) and wherein the first frame (420a) and the second frame (420b) define a bending axis (430) between the second end and the third end;
a continuous cover material (410) bonded to the first frame (420a) and to the second frame (420b) and across the bending axis (430);
a first display device (480a) positioned in a first aperture (460a) of the first frame (420a), wherein
the vehicle interior system (400) has a first configuration in which the first frame (420a) is substantially planar with the second frame (420b) and a second configuration in which the continuous cover material (410) is bent about the bending axis (430) such that the first frame (420a) is not substantially planar with the second frame (420b); and
the vehicle interior system (400) is configured to reversibly transition between the first configuration and the second configuration, **characterized in that**
at least one of:
the second end of the first frame (420a) and the third end of the second frame (420b) are connected by a pivotable joint (440) at the bending axis (430), and
the vehicle interior system (400) further comprises an actuator (450a, 450b) configured to move the vehicle interior system (400) between the first configuration and the second configuration.

2. The vehicle interior system (400) of claim 1, wherein the continuous cover material (410) comprises a glass and wherein the glass comprises at least one of a soda lime silicate glass, an aluminosilicate glass, a borosilicate glass, an boroaluminosilicate glass, or an alkali aluminosilicate glass, wherein the glass is chemically strengthened with an ion-exchange treatment.

3. The vehicle interior system (400) of any of the preceding claims, wherein the continuous cover material (410) has a thickness (T) in the range of 0.1 to 1.3 mm.

4. The vehicle interior system (400) of any of the preceding claims, further comprising a second display device (480b) mounted to the second frame (420b).

5. The vehicle interior system (400) of any of the preceding claims, wherein a first adhesive (470) bonds the continuous cover material (410) to the first frame (420a) and to the second frame (420b) and wherein the first adhesive (470) has a modulus of 1.1 MPa to 10 GPa, wherein the first adhesive (470) is applied at least at the first end of the first frame (420a) and at the fourth end of the second frame (420b).

6. The vehicle interior system (400) of claim 5, wherein the first adhesive (470) is not applied in a middle region of the vehicle interior system (400) over the second end of the first frame (420a) and the third end of the second frame (420b).

7. The vehicle interior system (400) of any of the preceding claims, wherein the vehicle interior system (400) comprises the actuator (450a, 450b) configured to move the vehicle interior system (400) between the first configuration and the second configuration.

8. The vehicle interior system (400) of any preceeding claims, wherein the second configuration defines at least one of a concave bend or a convex bend in the continuous cover material (410).

9. The vehicle interior system (400) of any one of the preceding claims, wherein the continuous cover material (410) is configured to bend to a radius of curvature of 60 mm or greater in the second configuration.

10. The vehicle interior system (400) of any one of the preceding claims, wherein the second end of the first frame (420a) and the third end of the second frame (420b) are connected by the pivotable joint (440) at the bending axis (430).

11. The vehicle interior system (400) of any one of the preceding claims, wherein the vehicle interior system (400) is at least one of center information display, an instrument panel, or an interior dashboard.

12. A method (500) of assembling a vehicle interior system (400) configured to be integrated in a vehicle, the method comprising
the steps of:
aligning (510) a first frame (420a) with a second frame (420b) in a planar configuration, wherein a bending axis (430) is formed between the first frame (420a) and the second frame (420b);
applying a first adhesive (470) to at least end regions of the first and second frames (420a, 420b);
laminating a continuous cover material (410) to the first and second frames (420a, 420b) and over the bending axis (430) while the first and second frames (420a, 420b) are in the planar configuration, **characterized in that** the method (500) further comprises at least one of attaching the first frame (420a) to the second frame (420b) via a pivotable joint (440) disposed between the first frame (420a) and the second frame (420b), and
attaching an actuator (450a, 450b) to the first frame (420a) and the second frame (420b) such that the actuator (450a, 450b) is configured to change the vehicle interior system (400) between a first configuration in which the first frame (420a) is substantially planar with the second frame (420b) and a second configuration in which the continuous cover material (410) is bent about the bending axis (430) such that the first frame (420a) is not substantially planar with the second frame (420b).

13. The method (500) of claim 12, wherein the step of aligning (410) further comprises attaching an alignment plate (600) to the first frame (420a) and the second frame (420b), inserting a first fastener (640a) through the alignment plate (600) into the first frame (420a), and inserting a second fastener (640b) through the alignment plate (600) into the second frame (420b).

14. The method (500) of claim 13, wherein the step of aligning further comprises mating raised or recessed features of the first and second frames (420a, 420b) with complementary recessed or raised features of the alignment plate (600).

15. The method (500) of any of claims 12-14, further comprising the step of mounting a first display device to the continuous cover material, wherein the first display device is mounted to the continuous cover material before the continuous cover material is laminated to the first frame (420a) and to the second frame (420b).

## Patentansprüche

1. Ein Fahrzeuginnenraumsystem (400), das zur Integration in ein Fahrzeug ausgelegt ist, mit:
einem ersten Rahmen (420a) mit einem ersten Ende und einem zweiten Ende;
einem zweiten Rahmen (420b) mit einem dritten Ende und einem vierten Ende, wobei das dritte Ende des zweiten Rahmens (420b) nahe am zweiten Ende des ersten Rahmens (420a) angeordnet ist und wobei der erste Rahmen (420a) und der zweite Rahmen (420b) eine Biegeachse (430) zwischen dem zweiten Ende und dem dritten Ende definieren;
einem durchgehenden Abdeckmaterial (410), das verbunden ist mit dem ersten Rahmen (420a) und dem zweiten Rahmen (420b) und über die Biegeachse (430);
einer ersten Anzeigevorrichtung (480a), die in einer ersten Öffnung (460a) des ersten Rahmens (420a) angeordnet ist, wobei
das Fahrzeuginnenraumsystem (400) eine erste Konfiguration aufweist, in der der erste Rahmen (420a) im Wesentlichen eben mit dem zweiten Rahmen (420b) ist, sowie eine zweite Konfiguration, in der das durchgehende Abdeckmaterial (410) um die Biegeachse (430) so gebogen ist, dass der erste Rahmen (420a) nicht im Wesentlichen eben mit dem zweiten Rahmen (420b) ist; und
das Fahrzeuginnenraumsystem (400) so ausgelegt ist, dass es reversibel zwischen der ersten Konfiguration und der zweiten Konfiguration wechselt, **dadurch gekennzeichnet, dass**
mindestens eines von:
dem zweiten Ende des ersten Rahmens (420a) und dem dritten Ende des zweiten Rahmens (420b) über ein schwenkbares Gelenk (440) an der Biegeachse (430) verbunden ist, und
das Fahrzeuginnenraumsystem (400) ferner einen Aktuator (450a, 450b) umfasst, der so ausgelegt ist, dass er das Fahrzeuginnenraumsystem (400) zwischen der ersten Konfiguration und der zweiten Konfiguration bewegt.

2. Das Fahrzeuginnenraumsystem (400) nach Anspruch 1, wobei das durchgehende Abdeckmaterial (410) ein Glas umfasst und wobei das Glas mindestens eines der folgenden Gläser umfasst: ein Kalk-Natron-Silikatglas, ein Aluminosilikatglas, ein Borosilikatglas, ein Boroaluminosilikatglas oder ein Alkali-Aluminosilikatglas, wobei das Glas durch eine Ionenaustauschbehandlung chemisch gehärtet ist.

3. Das Fahrzeuginnenraumsystem (400) nach einem der vorstehenden Ansprüche, wobei das durchgehende Abdeckmaterial (410) eine Dicke (T) im Bereich von 0,1 bis 1,3 mm aufweist.

4. Das Fahrzeuginnenraumsystem (400) nach einem der vorstehenden Ansprüche, das ferner eine zweite Anzeigevorrichtung (480b) umfasst, die an dem zweiten Rahmen (420b) angebracht ist.

5. Das Fahrzeuginnenraumsystem (400) nach einem der vorstehenden Ansprüche, wobei ein erster Klebstoff (470) das durchgehende Abdeckmaterial (410) mit dem ersten Rahmen (420a) und dem zweiten Rahmen (420b) verbindet und wobei der erste Klebstoff (470) einen Modul von 1,1 MPa bis 10 GPa aufweist, wobei der erste Klebstoff (470) zumindest am ersten Ende des ersten Rahmens (420a) und am vierten Ende des zweiten Rahmens (420b) aufgebracht ist.

6. Das Fahrzeuginnenraumsystem (400) nach Anspruch 5, wobei der erste Klebstoff (470) nicht aufgebracht ist in einem mittleren Bereich des Fahrzeuginnenraumsystems (400) über dem zweiten Ende des ersten Rahmens (420a) und dem dritten Ende des zweiten Rahmens (420b).

7. Das Fahrzeuginnenraumsystem (400) nach einem der vorstehenden Ansprüche, wobei das Fahrzeuginnenraumsystem (400) den Aktuator (450a, 450b) umfasst, der so konfiguriert ist, dass er das Fahrzeuginnenraumsystem (400) zwischen der ersten Konfiguration und der zweiten Konfiguration bewegt.

8. Das Fahrzeuginnenraumsystem (400) nach einem der vorstehenden Ansprüche, wobei die zweite Konfiguration mindestens entweder eine konkave Biegung oder eine konvexe Biegung im durchgehenden Abdeckmaterial (410) definiert.

9. Das Fahrzeuginnenraumsystem (400) nach einem der vorstehenden Ansprüche, wobei das durchgehende Abdeckmaterial (410) so ausgebildet ist, dass es sich in der zweiten Konfiguration auf einen Krümmungsradius von 60 mm oder mehr biegt.

10. Das Fahrzeuginnenraumsystem (400) nach einem der vorstehenden Ansprüche, wobei das zweite Ende des ersten Rahmens (420a) und das dritte Ende des zweiten Rahmens (420b) durch das schwenkbare Gelenk (440) an der Biegeachse (430) verbunden sind.

11. Das Fahrzeuginnenraumsystem (400) nach einem der vorstehenden Ansprüche, wobei das Fahrzeuginnenraumsystem (400) mindestens eines der folgenden Elemente ist: eine zentrale Informationsanzeige, eine Instrumententafel oder ein Armaturenbrett.

12. Ein Verfahren (500) zum Zusammenbau eines Fahrzeuginnenraumsystems (400), das zur Integration in ein Fahrzeug ausgelegt ist, wobei das Verfahren die folgenden Schritte umfasst:
Ausrichten (510) eines ersten Rahmens (420a) mit einem zweiten Rahmen (420b) in einer ebenen Anordnung, wobei zwischen dem ersten Rahmen (420a) und dem zweiten Rahmen (420b) eine Biegeachse (430) gebildet wird;
Auftragen eines ersten Klebstoffs (470) auf zumindest die Endbereiche des ersten und des zweiten Rahmens (420a, 420b);
Laminieren eines durchgehenden Abdeckmaterials (410) auf den ersten und den zweiten Rahmen (420a, 420b) und über die Biegeachse (430), während sich der erste und der zweite Rahmen (420a, 420b) in der ebenen Anordnung befinden, **dadurch gekennzeichnet, dass** das Verfahren (500) ferner umfasst mindestens eines von:
Befestigen des ersten Rahmens (420a) am zweiten Rahmen (420b) über ein schwenkbares Gelenk (440), das zwischen dem ersten Rahmen (420a) und dem zweiten Rahmen (420b) angeordnet ist, und
Befestigen eines Aktuators (450a, 450b) an dem ersten Rahmen (420a) und dem zweiten Rahmen (420b), derart, dass der Aktuator (450a, 450b) so ausgelegt ist, dass er das Fahrzeuginnenraumsystem (400) zwischen einer ersten Konfiguration, in der der erste Rahmen (420a) im Wesentlichen eben mit dem zweiten Rahmen (420b) ist, und einer zweiten Konfiguration zu verändern, in der das durchgehende Abdeckmaterial (410) um die Biegeachse (430) so gebogen ist, dass der erste Rahmen (420a) nicht im Wesentlichen eben mit dem zweiten Rahmen (420b) ist.

13. Das Verfahren (500) nach Anspruch 12, wobei der Schritt des Ausrichtens (410) ferner umfasst das Anbringen einer Ausrichtungsplatte (600) an dem ersten Rahmen (420a) und dem zweiten Rahmen (420b), das Einführen eines ersten Befestigungselements (640a) durch die Ausrichtungsplatte (600) in den ersten Rahmen (420a), und das Einführen eines zweiten Befestigungselements (640b) durch die Ausrichtungsplatte (600) in den zweiten Rahmen (420b).

14. Das Verfahren (500) nach Anspruch 13, wobei der Schritt des Ausrichtens ferner das Zusammenfügen von erhabenen oder vertieften Merkmalen des ersten und des zweiten Rahmens (420a, 420b) mit komplementären vertieften oder erhabenen Merkmalen der Ausrichtungsplatte (600) umfasst.

15. Das Verfahren (500) nach einem der Ansprüche 12-14, das ferner den Schritt des Anbringens einer ersten Anzeigevorrichtung an dem durchgehenden Abdeckmaterial umfasst, wobei die erste Anzeigevorrichtung an dem durchgehenden Abdeckmaterial angebracht wird, bevor das durchgehende Abdeckmaterial auf den ersten Rahmen (420a) und den zweiten Rahmen (420b) laminiert wird.

## Revendications

1. Système d'intérieur de véhicule (400) conçu pour être intégré dans un véhicule, comprenant :
un premier cadre (420a) comportant une première extrémité et une deuxième extrémité ;
un deuxième cadre (420b) comportant une troisième extrémité et une quatrième extrémité, dans lequel la troisième extrémité du deuxième cadre (420b) est disposée à proximité de la deuxième extrémité du premier cadre (420a) et dans lequel le premier cadre (420a) et le deuxième cadre (420b) définissent un axe de flexion (430) entre la deuxième extrémité et la troisième extrémité ;
un matériau de revêtement continu (410) lié au premier cadre (420a) et au deuxième cadre (420b) et s'étendant en travers de l'axe de flexion (430) ;
un premier dispositif d'affichage (480a) positionné dans une première ouverture (460a) du premier cadre (420a), dans lequel
le système d'intérieur de véhicule (400) présente une première configuration dans laquelle le premier cadre (420a) est sensiblement plan par rapport au deuxième cadre (420b) et une deuxième configuration dans laquelle le matériau de revêtement continu (410) est courbé autour de l'axe de flexion (430) de telle sorte que le premier cadre (420a) ne soit pas sensiblement plan par rapport au deuxième cadre (420b) ; et
le système d'intérieur de véhicule (400) est configuré pour passer de manière réversible de la première configuration à la deuxième configuration, **caractérisé en ce que**
au moins l'une des parties suivantes :
la deuxième extrémité du premier cadre (420a) et la troisième extrémité du deuxième cadre (420b) sont reliées par une articulation pivotante (440) au niveau de l'axe de flexion (430), et
le système d'intérieur de véhicule (400) comprend en outre un actionneur (450a, 450b) configuré pour déplacer le système d'intérieur de véhicule (400) entre la première configuration et la deuxième configuration.

2. Système d'intérieur de véhicule (400) selon la revendication 1, dans lequel le matériau de revêtement continu (410) comprend du verre et dans lequel le verre comprend au moins l'un des éléments suivants : un verre au silicate de soude et de chaux, un verre aluminosilicate, un verre borosilicate, un verre boroaluminosilicate ou un verre aluminosilicate alcalin, le verre étant renforcé chimiquement par un traitement d'échange d'ions.

3. Système d'intérieur de véhicule (400) selon l'une quelconque des revendications précédentes, dans lequel le matériau de revêtement continu (410) présente une épaisseur (T) comprise entre 0,1 et 1,3 mm.

4. Système d'intérieur de véhicule (400) selon l'une quelconque des revendications précédentes, comprenant en outre un deuxième dispositif d'affichage (480b) monté sur le deuxième cadre (420b).

5. Système d'intérieur de véhicule (400) selon l'une quelconque des revendications précédentes, dans lequel un premier adhésif (470) lie le matériau de revêtement continu (410) au premier cadre (420a) et au deuxième cadre (420b) et dans lequel le premier adhésif (470) présente un module compris entre 1,1 MPa et 10 GPa, le premier adhésif (470) est appliqué au moins à la première extrémité du premier cadre (420a) et à la quatrième extrémité du deuxième cadre (420b).

6. Système d'intérieur de véhicule (400) selon la revendication 5, dans lequel le premier adhésif (470) n'est pas appliqué dans une région centrale du système d'intérieur de véhicule (400) au-dessus de la deuxième extrémité du premier cadre (420a) et de la troisième extrémité du deuxième cadre (420b).

7. Système d'intérieur de véhicule (400) selon l'une quelconque des revendications précédentes, dans lequel le système d'intérieur de véhicule (400) comprend l'actionneur (450a, 450b) configuré pour déplacer le système d'intérieur de véhicule (400) entre la première configuration et la deuxième configuration.

8. Système d'intérieur de véhicule (400) selon l'une quelconque des revendications précédentes, dans lequel la deuxième configuration définit au moins l'un parmi une flexion concave ou une flexion convexe dans le matériau de revêtement continu (410).

9. Système d'intérieur de véhicule (400) selon l'une quelconque des revendications précédentes, dans lequel le matériau de revêtement continu (410) est configuré pour se courber selon un rayon de courbure de 60 mm ou plus dans la deuxième configuration.

10. Système d'intérieur de véhicule (400) selon l'une quelconque des revendications précédentes, dans lequel la deuxième extrémité du premier cadre (420a) et la troisième extrémité du deuxième cadre (420b) sont reliées par l'articulation pivotante (440) au niveau de l'axe de flexion (430).

11. Système d'intérieur de véhicule (400) selon l'une quelconque des revendications précédentes, dans lequel le système d'intérieur de véhicule (400) est au moins l'un parmi un écran d'affichage d'informations central, un panneau d'instruments ou un tableau de bord intérieur.

12. Procédé (500) d'assemblage d'un système d'intérieur de véhicule (400) configuré pour être intégré dans un véhicule, le procédé comprenant les étapes consistant à :
aligner (510) un premier cadre (420a) avec un deuxième cadre (420b) dans une configuration plane, un axe de flexion (430) étant formé entre le premier cadre (420a) et le deuxième cadre (420b) ;
appliquer un premier adhésif (470) sur au moins les zones d'extrémité des premier et deuxième cadre (420a, 420b) ;
laminer un matériau de revêtement continu (410) sur les premier et deuxième cadres (420a, 420b) et par-dessus l'axe de flexion (430) tandis que les premier et deuxième cadres (420a, 420b) se trouvent dans la configuration plane, **caractérisé en ce que** le procédé (500) comprend en outre au moins l'une des:
la fixation du premier cadre (420a) au deuxième cadre (420b) par l'intermédiaire d'une articulation pivotante (440) disposée entre le premier cadre (420a) et le deuxième cadre (420b), et
la fixation d'un actionneur (450a, 450b) au premier cadre (420a) et au deuxième cadre (420b) de telle sorte que l'actionneur (450a, 450b) soit configuré pour faire passer le système d'intérieur de véhicule (400) entre une première configuration dans laquelle le premier cadre (420a) est sensiblement plan par rapport au deuxième cadre (420b) et une deuxième configuration dans laquelle le matériau de revêtement continu (410) est courbé autour de l'axe de flexion (430) de telle sorte que le premier cadre (420a) ne soit pas sensiblement plan par rapport au deuxième cadre (420b).

13. Procédé (500) selon la revendication 12, dans lequel l'étape d'alignement (410) comprend en outre la fixation d'une plaque d'alignement (600) au premier cadre (420a) et au deuxième cadre (420b), l'insertion d'un premier élément de fixation (640a) à travers la plaque d'alignement (600) dans le premier cadre (420a) et l'insertion d'un deuxième élément de fixation (640b) à travers la plaque d'alignement (600) dans le deuxième cadre (420b).

14. Procédé (500) selon la revendication 13, dans lequel l'étape d'alignement comprend en outre l'accouplement d'éléments en saillie ou en creux des premier et deuxième cadres (420a, 420b) avec des éléments en creux ou en saillie complémentaires de la plaque d'alignement (600).

15. Procédé (500) selon l'une quelconque des revendications 12 à 14, comprenant en outre l'étape consistant à monter un premier dispositif d'affichage sur le matériau de revêtement continu, dans lequel le premier dispositif d'affichage est monté sur le matériau de revêtement continu avant que ce dernier ne soit laminé sur le premier cadre (420a) et sur le deuxième cadre (420b).
